**Europäisches Patentamt**

**European Patent Office**

**Office européen des brevets**

(19)

(11) Numéro de publication : **0 407 278 B1**

(12) **FASCICULE DE BREVET EUROPEEN**

(45) Date de publication du fascicule du brevet :
**20.01.93 Bulletin 93/03**

(51) Int. Cl.$^5$ : **F26B 17/14, F26B 3/08,**
**F26B 23/00**

(21) Numéro de dépôt : **90401892.6**

(22) Date de dépôt : **29.06.90**

(54) **Tour de séchage de produits en grains.**

(30) Priorité : **06.07.89 FR 8909143**

(43) Date de publication de la demande :
**09.01.91 Bulletin 91/02**

(45) Mention de la délivrance du brevet :
**20.01.93 Bulletin 93/03**

(84) Etats contractants désignés :
**AT BE CH DE DK ES FR GB GR IT LI LU NL SE**

(56) Documents cités :
**EP-A- 0 129 171**
**EP-A- 0 299 279**
**AU-B- 8 291 782**
**CH-A- 110 335**
**CH-A- 227 836**
**DE-A- 2 928 962**
**DE-C- 287 155**
**DE-C- 969 061**
**FR-A- 528 430**
**FR-A- 1 011 448**
**FR-A- 2 336 970**

(56) Documents cités :
**FR-A- 2 539 586**
**GB-A- 156 963**
**GB-A- 364 762**
**US-A- 1 452 166**
**US-A- 1 553 944**
**US-A- 1 782 244**
**US-A- 3 611 585**
**US-A- 4 294 020**
**US-A- 4 337 584**
**US-A- 4 526 731**
**US-A- 4 601 113**
**US-A- 4 619 053**

(73) Titulaire : **Laurenty, François**
**52 Rue Lenain de Tillemont**
**F-93100 Montreuil (FR)**

(72) Inventeur : **Laurenty, François**
**52 Rue Lenain de Tillemont**
**F-93100 Montreuil (FR)**

(74) Mandataire : **CABINET BONNET-THIRION**
**95 Boulevard Beaumarchais**
**F-75003 Paris (FR)**

## Description

Le FR-A-989.842 décrit un moyen de diminuer la consommation d'énergie thermique consommée par l'évaporation de l'eau contenue dans des grains végétaux lors du séchage nécessaire à leur conservation.

Ce brevet revendique "des éléments échangeurs de chaleur montés dans la zone de chauffage préalable, éléments qui transmettent au produit à traiter la chaleur des vapeurs de la zone de chauffage".

Un calcul simple montre que ce dispositif pourrait permettre une économie d'énergie comprise entre 10 et 20 % par contact entre les grains et des ailettes montées sur les tubes condensant une partie de la vapeur produite par le séchage d'un grain contenant 35 % d'humidité.

Le DE-A-3 516 062 montre le même souci des inventeurs d'économiser l'énergie dans le séchage de matériaux granuleux ; il réalise le séchage par contact avec les parois de 186 tubes verticaux et par léchage de gaz, de vapeur ou d'air sur la surface hélicoïdale intérieure d'une veine de granulés descendant entre deux parois hélicoïdales portées par le tube. Ce procédé semble beaucoup trop coûteux pour se vendre facilement dans l'état actuel du coût de l'énergie et semble consommer plus de 800 KWH thermique par tonne d'eau évaporée.

De plus, le volume de gaz de vapeur ou d'air à véhiculer ne sert qu'une fois.

Enfin, comme dans le FR-A-989.842, la récupération de l'énergie correspondant à la chaleur latente de l'eau évaporée n'est que partielle et, ne doit probablement pas dépasser 20 % quand il travaille avec air ou gaz entre 40° et 99°C.

Un troisième brevet, à savoir le brevet BE-A-715694 intitulé "Méthode et appareil de séchage en vrac par congélation" présente un grand intérêt du point de vue des dessins mais, bien que ce brevet affirme, plusieurs fois, vouloir assurer une circulation continue des corps granulés congelés, aucun des dessins, aucune des descriptions n'en montre les moyens, et aucun moyen ne montre un recyclage du fluide sécheur et encore moins un effet de fluidisation des corps granulés congelés, par un fluide.

Enfin, l'appareil décrit doit consommer entre 1000 et 2000 KWH par tonne d'eau évaporée.

On sait aussi, d'après le US-A-3.611.585, sécher des produits en grains dans une tour à étages avec circulation des grains de haut en bas et d'un étage à l'autre alors qu'un fluide sécheur circule à contre-courant avec fluidisation de ces grains dans chaque étage avec échange thermique sur des tubes croisés alimentés en un fluide caloporteur pour surchauffer ledit fluide sécheur lequel est recyclé ensuite à l'étage le plus bas après avoir traversé la tour sur toute sa hauteur. L'application d'une telle tour ne donne toutefois pas entière satisfaction du point de vue énergétique.

La présente invention a pour objet de pousser beaucoup plus loin l'économie d'énergie éventuellement obtenue par le FR-A-989.842 ou par le US-A-3 611 585. ci-dessus.

Dans ce brevet N° 989.842, en effet, une partie de l'air recyclé, sortant saturé des tubes condenseurs (4) est surchauffé une seule fois avant d'entrer dans les gaines non perforées (6) pour se partager en deux veines : l'une se dirigeant vers le haut à travers tous les grains et commencer le séchage jusqu'à sortir saturée (en 5), l'autre se dirigeant vers le bas à travers tous les grains en achevant leur séchage jusqu'à sortir saturée (ou pas) dans les gaines (7) et restituer au plus 0 à 30 % de l'énergie dépensée au réchauffage préalable des grains.

On peut faire la même constatation en procédant comme décrit audit brevet US-A-3.611.585

Au contraire, dans la présente invention, la totalité du fluide sécheur (gaz, vapeur ou air) entre saturé en vapeur produite par le séchage à une température $\Theta_0$ définie par la sensibilité thermique des grains à sécher, puis est surchauffé en grand nombre de fois sans apport nouveau mais en emportant avec lui la quantité maximale d'énergie récupérable par condensation. La présente invention ne pourra pas être applicable au sucre pas plus qu'à des produits très hygroscopiques.

Pour illustrer "la sensibilité" thermique on signalera que la température $\Theta_0$ sera, par exemple, réglée à 40°C environ pour sécher le tournesol, certaines graines oléagineuses et les graines de semence ; à 60 °C environ pour sécher le maïs amidonnier ; et à 100°C ou plus pour sécher des produits minéraux ou organiques très peu hydroscopiques, comme le sable de silice destiné à la verrerie ou les granulats destinés à l'enrobage pour revêtement de chaussées, ou encore les fourrages.

Mais, et cela distingue rigoureusement la présente invention de celles des deux brevets précédents, le fluide sécheur sera surchauffé légèrement 2N fois (N variant de 2 à 20) et saturé 2N fois en traversant et en séchant par fluidisation une couche mince de matière à sécher, portée par des trémies perforées et non par des gaines pleines comme dans le brevet français n° 989.842. Pour faciliter le passage des produits légers comme des poussières ou des follicules de maïs (ou de graines) de bas en haut et pour empêcher au mieux le passage des grains à sécher de haut en bas, les trous des trémies seront avantageusement orientés obliquement dans le sens de circulation des grains tout en étant assez larges pour laisser passer les corps légers. Le même fluide sécheur se charge donc progressivement de vapeur d'eau (ou de vapeur de solvant) et sort saturé d'eau (ou de solvant) à une température aussi peu différente que possible de la température $\Theta_0$. Dans le cas de l'eau, les calculs montrent que, par tonne d'eau évaporée, on peut sécher ces produits en consommant au maximum

140 KWH par tonne d'eau quand $\Theta_0 \sim 40°C$.

120 KHW électriques par tonne d'eau quand $\Theta_0 \sim 60°C$.

80 KWH électriques par tonne d'eau quand $\Theta_0 \sim 100°C$.

L'étude d'exécution montre, par ailleurs, que, pour un même coût d'achat de matériel, on peut évaporer 1 tonne d'eau à $\Theta_0 = 40°C$, 1,5 à 2 tonnes d'eau à $\Theta_0 = 60°C$ et 3 à 4 tonnes d'eau quand $\Theta_0 = 100°C$.

Les hommes de l'art savent que la chaleur spécifique pondérale de la vapeur d'eau est égale à 4 fois la chaleur spécifique pondérale de l'air ; ils savent que la conductivité thermique de l'eau est environ deux fois plus grande que celle de l'air. Ces personnes comprendront que les dépenses de ventilation soient divisées par presque 4, quand on passe de 10 % d'eau ($\Theta_0 = 40°C$) à 0 % d'air et 100 % d'eau $\Theta_0 = 100°C$).

Les hommes de l'art comprennent également que les coefficients de performance (COP) des compresseurs varient de 6 quand $\Theta_0 = 40°C$, à 10 et plus quand $\Theta_0 = 100°C$.

Ces remarques expliquent les consommations spécifiques de plus en plus faibles et les coûts d'installation de moins en moins élevés au fur et à mesure que la température s'accroît de 40°C à 100°C.

Ainsi la présente invention fournit une tour pour séchage de produits en grains avec récupération importante d'énergie, du type dans lequel un fluide sécheur (air, gaz ou vapeur) entre à une température $\Theta_0$, saturé de la vapeur produite par le séchage de ces grains et est surchauffé à une température supérieure à $\Theta_0$ par contact avec des tubes croisés, chauffés à $\Theta_2 > \Theta_0$, puis traverse des grilles perforées et les matières granuleuses à sécher en les fluidisant et en les séchant, ce même fluide sécheur, de plus en plus chargé en vapeur, reproduisant de 4 à 40 fois et plus cette surchauffe, cette fluidisation séchante et désurchauffante et sortant à contre-courant par rapport à la circulation des produits granuleux et à une température $\Theta_1$ pour être recyclé sous les premiers tubes croisés, cette tour se caractérisant en ce que ledit fluide sécheur est saturé de la vapeur produite par le séchage, lesdites grilles disposées au-dessus desdits tubes croisés comportent des trous orientés dans le sens de la circulation des grains d'un étage à l'autre et lesdits tubes croisés sont en forme de doigts de gants, bouchés à une extrémité disposés horizontalement ou inclinés vers le bas depuis ladite extrémité bouchée jusqu'à l'entrée du fluide caloporteur qui les alimente.

Suivant des modes particulières

- la face frontale de la tour est amovible et les grilles perforées sont amovibles sur des glissières ou des consoles comme les plateaux d'un four réglables en hauteur ;

- la tour a la forme d'un cylindre de révolution, lesdites grilles sont des anneaux inclinés et lesdits tubes croisés sont des cercles concentriques ;

- lesdites grilles sont des trémies sous forme de dièdres alternées envoyant les grains de matière du centre vers la périphérie et de la périphérie vers le centre ou bien en forme de toiture à deux ailes (trémies mâles) ou en forme de double auvent (trémies femelles) ;

- lesdites trémies sont des plans obliques amenant les grains d'une face latérale vers la face opposée tantôt dans un sens, tantôt en sens inverse ;

- tout ou partie des grilles de fluidisation est animée de vibrations ;

- les grilles perforées ont la forme de dièdres de grande pente ou bien sont directement constituées par les tubes surchauffeurs eux-mêmes ;

- une partie sensiblement équivalente à la vapeur évaporée par séchage est comprimée par un compresseur à la température $\theta_2 > \theta_0$ pour aller se condenser à cette température $\theta_2$ dans des tubes croisés tandis qu'un ventilateur recycle la vapeur à $\theta_0$ ;

- le fluide sécheur saturé de vapeur sortant à $\theta_1$ est envoyé par un ventilateur dans un condenseur où la vapeur formée par le séchage se condense en faisant bouillir un liquide intermédiaire avant de retourner à $\theta_0$ dans le circuit de séchage et le gaz formé par évaporation du liquide intermédiaire est comprimé pour atteindre la température $\theta_2$ supérieure à $\theta_1$, dans lesdits tubes croisés ;

- le fluide sécheur peut être un solvant.

A la différence du DE-A-3 516 052, la mise en oeuvre de l'invention réalise le séchage par 2N traversées fluidisantes des matériaux granuleux, de telle façon que la capacité calorique d'un même fluide sécheur est utilisée 2N fois (N variant de 1 à 20 par exemple) et de telle façon que, par fluidisation, le fluide sécheur a beaucoup plus de contacts intimes avec chacun des granulés que n'en permet le DE-A-3 516 062 et elle évite aussi le contact des grains avec une paroi très chaude que peut provoquer le DE-A-3 516 062 qui pour cette raison ne pourrait être utilisé pour sécher des semences ou des graines fragiles comme le tournesol.

A la différence du brevet belge n° 715 694 la présente invention facilite la circulation des granulés par fluidisation en prévoyant de nombreuses grilles perforées présentant chacune de nombreux trous.

Dans cette description on ne décrira ni le stockage des grains, ni leur répartition, ni les systèmes de refroidissement, ni le préchauffage des grains en utilisant la chaleur de l'air sortant du refroidisseur : toutes solutions largement connues dans la technique.

Les avantages de l'invention ressortiront de la description qui va suivre.

Cette description est faite en se référant aux dessins annexés sur lesquels :

- la figure 1 représente en perspective une paire de trémies utilisées dans une tour de séchage selon l'invention;
- la figure 2 représente une variante de réalisation de trémies également utilisables ;
- la figure 3 représente en perspective cavalière une tour de séchage montrant la façon dont peut être montée une des trémies ainsi qu'une partie d'une nappe de tubes de chauffage ;
- les figures 4 et 5 représentent respectivement en plan et de profil une "nourrice" d'alimentation des tubes de chauffage de la figure 3 ;
- la figure 6 est le schéma d'une installation de séchage comportant une tour du type partiellement illustré à la figure 3 ;
- la figure 7 est le schéma d'une installation fonctionnant selon une variante du procédé ;
- la figure 8 est le schéma montrant une zone d'une tour selon l'invention occupée par la matière granuleuse à sécher en fonction d'une inclinaison différente des parois des trémies et un fonctionnement discontinu ;
- la figure 9 correspond à la figure 8 en l'absence de trémies.

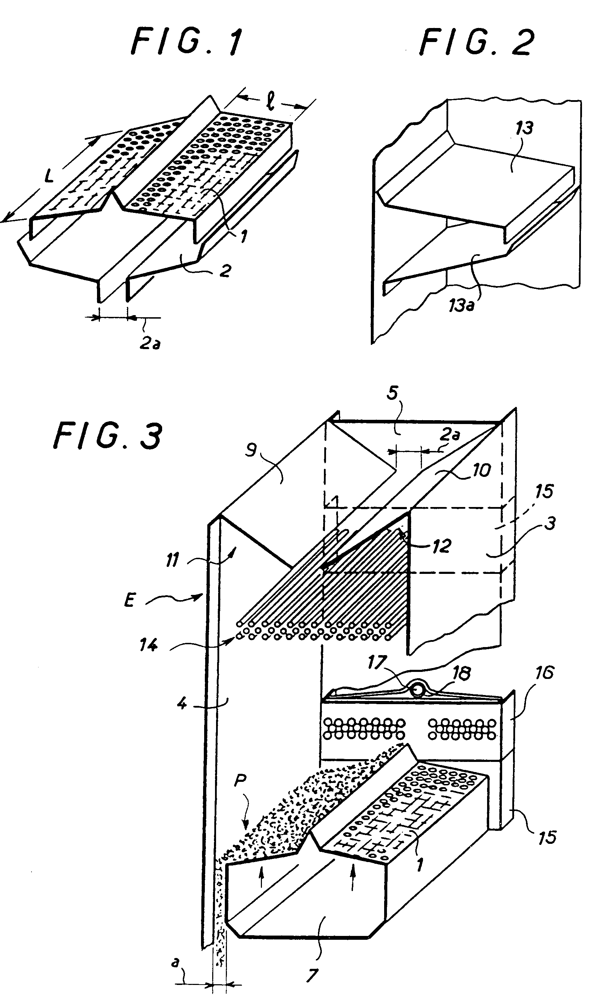

En se référant à ces figures on a schématisé, sur les figures 3, 6 et 7 une tour parallélépipédique rectangle donc de section horizontale rectangulaire et qui, dans le cas considéré correspond à un fonctionnement à une pression à l'intérieur de la tour de séchage peu différente de la pression atmosphérique. Cependant, on ne sort pas du cadre de la présente invention en admettant dans l'intérieur de la tour une pression inférieure ou supérieure à la pression atmosphérique. Dans ce cas il sera préférable que la tour soit un cylindre de révolution.

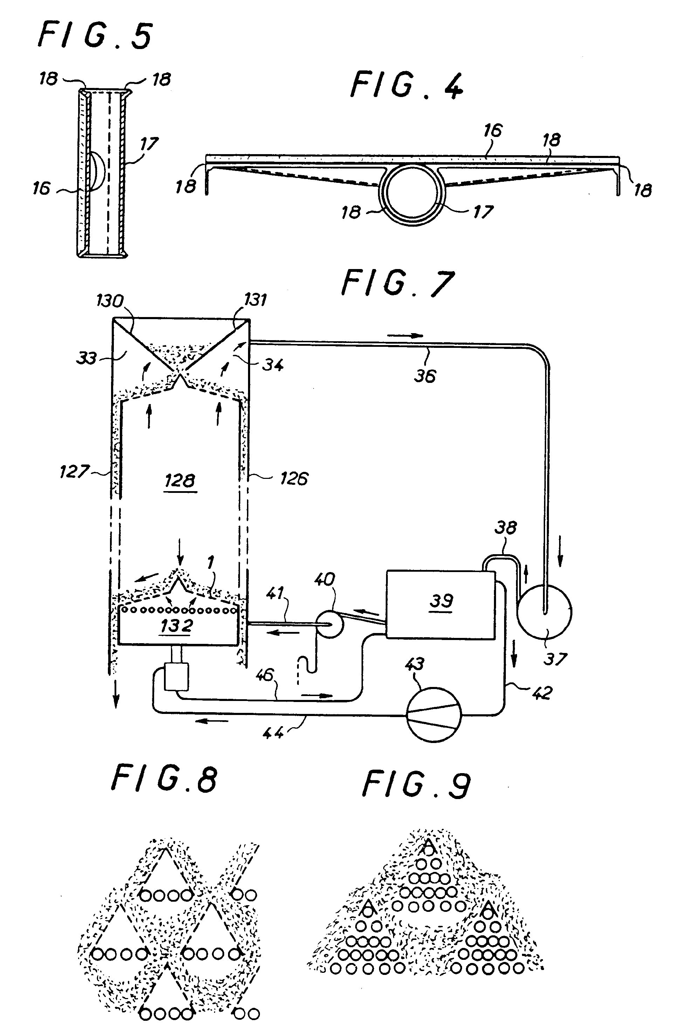

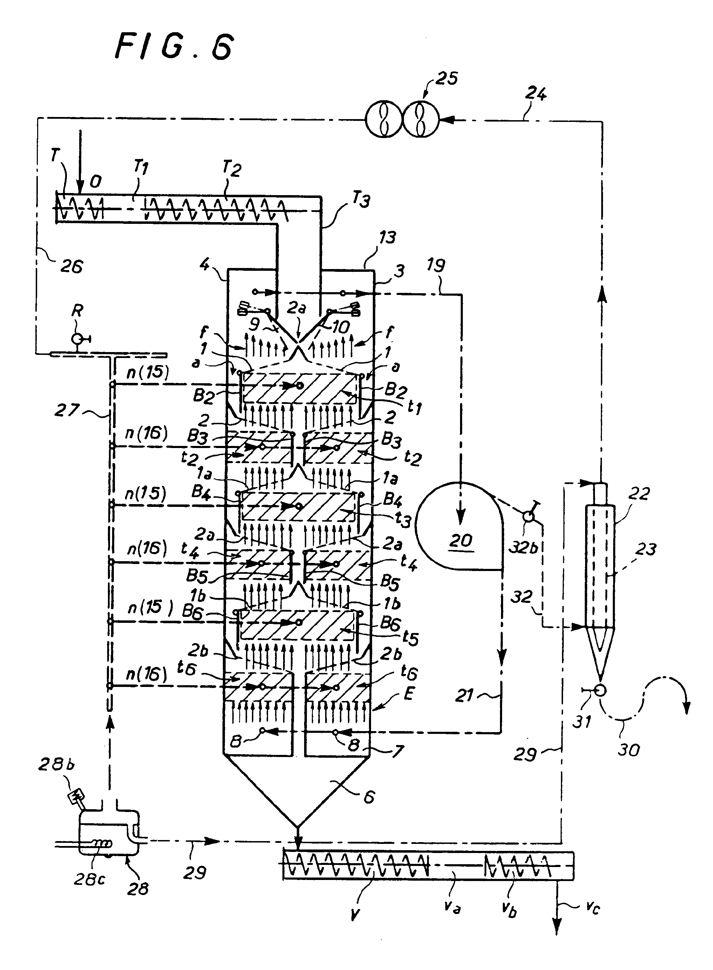

Ainsi l'installation, avec une telle tour parallélépipédique E illustrée à la figure 6 comporte, schématisé par la flèche "O" un dispositif d'admission de la matière à sécher. Cette dernière est admise dans un dispositif d'alimentation par exemple du type vis transporteuse T, interrompue en $T_1$ et prolongée en $T_2$. A la sortie de ce dispositif est prévue une goulotte verticale $T_3$ fermée par des volets basculants 9-10 et pénétrant à l'intérieur de la tour E au travers de sa paroi supérieure 13. Au sein de celle-ci est montée une paire de plateaux perforés dits ci-après grilles ou trémies mâles 1 parce que divergentes (telles qu'illustrées plus en détail à la figure 1), grilles séparées en leur milieu par un prisme plein placé en dessous des volets 9-10 de façon à répartir le flux de granulats en deux nappes aussi égales que possible, l'une de ces nappes étant schématisée en P sur la figure 3. La face avant (non représentée) de la tour E est prévue amovible et les grilles dont il vient d'être question sont montées de façon à entrer et sortir de l'enceinte comme le font les plateaux d'un four ou les clayettes d'un réfrigérateur; par ailleurs, ces grilles peuvent être associées à un système (non représenté) pouvant leur imprimer un mouvement vibratoire. Ces grilles ou trémies mâles 1 présentent les dimensions L et 1 indiquées à cette figure 1. La pente de la toiture ou celle des faces du dièdre qui est la forme de ces trémies mâles sera adaptée à chaque matière à traiter, cette forme ayant pour but de laisser s'écouler cette matière depuis le centre vers chacune des faces latérales opposées 3-4. La paroi 5 (figure 3) constitue le fond de la tour E. Les volumes 11 et 12 compris entre chacun des plans 9 et 10 et le plan horizontal passant par l'arête supérieure des trémies 1 reçoivent la vapeur sortant du séchoir (comme on le verra ci-après). En outre les trous dont sont munies les trémies seront de préférence orientés dans le sens de circulation des grains sur ces trémies. Dans le volume $t_1$ situé au-dessous des trémies 1 est disposé un faisceau de tubes bouchés 14 (voir figure 3) avantageusement montés inclinés (par exemple avec une pente de 1 %) au dessous du plan horizontal depuis le bouchon jusqu'à des nourrices horizontales n 15 et n 16 (figure 6) également schématisées en 15-16 sur la figure 3. Pour ce qui est de ces nourrices, on remarquera en se référant aux figures 4 et 5 qu'elles sont destinées à être alimentées en vapeur, suivant le procédé de l'invention, grâce à un tronçon tubulaire 17. Elles sont assemblées les unes aux autres par des joints 18 résistant à la chaleur (120°). Une nourrice verticale N est également prévue pour alimenter lesdites nourrices horizontales.

De chaque côté de ce faisceau $t_1$ de tubes 14, des volets articulés $B_2$-$B_2$ sont prévus pour forcer la vapeur à traverser ces tubes, comme on le verra ci-après.

Au dessous de ce même faisceau $t_1$ de tubes 14 est montée une paire de plateaux perforés 2 ou trémies dites femelles (figure 1) dont les plans inclinés ont pour but de ramener les granulats de la périphérie vers le centre. Les cotes "a" (figure 6) et "2a" (figure 1) illustrent les couloirs réservés au passage des matières d'une trémie mâle à une trémie femelle et d'une trémie femelle à la trémie mâle suivante (comme cela ressortira ci-après). Le couloir 2a est délimité par deux volets basculants $B_3$-$B_3$ placés à égale distance de l'arête du prisme plein réunissant les deux trémies perforées mâles 1a-1a.

L'espace $t_2$ situé au dessous des trémies femelles 2 est, lui-aussi, occupé par un faisceau de tubes bouchés inclinés du type de faisceau des tubes 14 définis ci-dessus.

Au dessous des trémies mâles 1a-1a est là encore prévu dans l'espace $t_3$ un faisceau de tubes du type 14 au dessus d'une paire de trémies femelles 2a-2a identiques aux trémies femelles 2-2 de l'étage précédent et ainsi de suite jusqu'à la dernière paire des trémies femelles 2b-2b situées au dessous de la paire des trémies mâles 1b-1b, ces deux paires de trémies délimitent l'espace $t_5$.

Au dessous de cette paire de trémies femelles 2b-2b l'espace $t_6$ est occupé par un faisceau de tubes du type des tubes 14 alimenté par des admissions tubulaires 8-8, dans l'espace 7 se terminant par une trémie 7a formant la base de la tour E.

Cette trémie débouche dans la vis transporteuse V interrompue en $V_a$ et terminée en $V_b$ jusqu'à la sortie en $V_c$.

L'installation décrite ci-dessus comporte en outre: un ventilateur 20, un cyclone 22 muni au centre d'un tube perforé 23, un surpresseur 25, des robinets à boisseau 32b et 31 et les tuyauteries de liaison appropriées pour le cheminement des fluides comme on le verra ci-après à la base des nourrices verticales N (référence 27, figure 6) se trouve une réserve d'eau 28 surmontée d'une soupape tarée 28b avec une résistance chauffante 28c.

On décrira maintenant le fonctionnement d'une installation telle que décrite ci-dessus (voir figure 6). Au cours de cette description on pourra suivre :
1. Le cheminement des granulats.
2. La circulation de la vapeur de séchage.
3. La circulation de la vapeur de chauffage.

## 1. Cheminement des granulats :

Les matières granuleuses introduites en O cheminent dans la vis transporteuse T, sont en quelque sorte comprimées dans la partie de vis interrompue $T_1$ et sont reprises en $T_2$ par la vis pour descendre en $T_3$. Le contrôle de l'alimentation de la tour E se fait grâce aux deux volets 9-10 qui répartissent ainsi régulièrement sur chacune des grilles 1 la matière granuleuse qui chemine à la vitesse V sous l'influence fluidisante de la vapeur ascendante (flèches f) jusqu'à tomber en poussant les volets $B_2$-$B_2$ sur les deux trémies femelles convergentes 2 qui les ramènent entre les volets $B_3$-$B_3$ au centre des trémies divergentes 1a-1a et ainsi de suite jusqu'à tomber dans la trémie 6 puis dans la vis V pour être comprimée dans la vis interrompue $V_a$ jusqu'à la vis $V_b$ qui la déverse en $V_c$.

## 2. Cheminement de la vapeur de séchage :

Circulant à contre courant par rapport aux granulats, la vapeur entre à une pression supérieure à la pression atmosphérique et à plus de 100°C en 8-8 sous les faisceaux tubulaires $t_6$-$t_6$ croisés qui sont chauffés à 120°C. Après avoir léché ces tubes, la vapeur se trouve surchauffée à 105°C, elle traverse alors les trous des grilles 2b-2b et les granulats descendant par sa fluidisation et achève leur séchage en se saturant. A gauche et à droite des tubes du faisceau $t_5$, les volets $B_6$-$B_6$ poussés par la vapeur contre les grains descendants, empêchent ou limitent son passage et la forcent à lécher les tubes croisés du faisceau $t_5$ et à se surchauffer à 105°C au contact de leurs 120°C et à traverser la couche de granulats fluidisés par elle et séchés, et ainsi de suite, jusqu'à la dernière traversée de la dernière grille perforée 1-1 et des granulats descendants avant séchage. Bien entendu, les deux volets $B_1$-$B_1$ limitent la sortie de vapeur par $T_3$ et le bouchon $T_1$ annule presque cette sortie. De même le bouchon formé en Va dans la vis V diminue la sortie de vapeur à pression supérieure à la pression atmosphérique par le cheminement.

Après cette dernière traversée des granulats, la vapeur sous pression à peine supérieure à la pression atmosphérique (pour empêcher toute entrée d'air) est aspirée par le ventilateur 20 et refoulée sous pression supérieure à l'atmosphère sous les tubes des faisceaux $t_6$-$t_6$ et recommence le circuit précédent.

La vapeur produite par le séchage augmente donc le volume total du fluide de séchage et est extraite par le robinet à boisseau 32b pour servir de fluide de chauffage.

## 3. Cheminement du fluide de chauffage.

En marche établie, la vapeur sortie de 32b entre dans le cyclône 22 où des gicleurs 23 (figure 3) pulvérisent de l'eau condensée de façon à éliminer les poussières abrasives entraînées par le séchage et cette vapeur part vers le compresseur 25 par la conduite 24 pour être comprimée et pour voir sa température élevée à $\Theta_2$ (120°C) ($\Theta_2$ supérieure à la température $\Theta_0$ d'admission dans la tour E). Le compresseur 25 refoule cette vapeur par la conduite 26 dans la nourrice verticale 27.

Le bas de cette nourrice 27 est relié à la réserve d'eau 28 laquelle est également reliée à la conduite 29 de circulation de l'eau condensée à $\Theta_2$ pour alimenter tangentiellement le cylindre prolongé à l'intérieur du cyclone 22 par un tamis 23.

L'eau condensée et les boues sont éliminées en permanence par le tube à siphon 30 dont la fermeture est obtenue par le robinet à pointeau 31.

Avant d'introduire les produits à sécher, on vérifie que les robinets 31 et 32b sont fermés. On ouvre le robinet R et on chauffe la réserve d'eau en 28 par le serpentin de chauffage 28c. Après quelques minutes d'ébullition la plus grande partie de l'air est évacuée par R ; on met alors en route le compresseur 25, on met en route le ventilateur 20 et dès que l'air atteint 100°C on introduit les granulats. la circulation gazeuse s'établit donc avec rechauffage, donc séchage et enrichissement de l'air en vapeur d'eau ; le volume en excès s'échappe par les orifices d'entrée et de sortie des granulats.

Quand l'air est à peu près totalement remplacé par la vapeur d'eau, on ouvre le robinet 32b, on arrête le chauffage de la réserve d'eau qui est renouvelée par la condensation de l'eau provenant des tubes chauffants 14 des différents faisceaux de tubes ($t_1$ à $t_6$) refroidis par le séchage. On ouvre alors le robinet 31 et on règle le niveau d'évacuation des eaux boueuses de condensation.

L'économie d'énergie commence.

Il est bien évident que pendant la période de mise en température qui a été décrite ci-dessus, le débit des granulats doit être réduit ou ceux-ci doivent être recyclés car la seule quantité de chaleur apportée par la résistance 28c et le compresseur est trop faible.

On remarquera par ailleurs que dans les conditions de marche normale, les tubes des faisceaux tubulaires $t_1$ à $t_6$ sont maintenus à une température constante $\Theta_2$ (par exemple 120°C) par la condensation de la plus grande partie de la vapeur de séchage cependant que la vapeur en excès est éliminée par la soupape 28b qui règle la surpression dans les chambres 7 et évacue à l'air les incondensables éventuels.

Sans tenir compte de la chaleur entraînée par les granulats dont on peut récupérer 60 % par préchauffage des granulats entrant, une telle installation de séchage selon l'invention ne consommerait que 88 KWH électrique par tonne d'eau évaporée pour le compresseur 25 et le ventilateur 20 tandis que les installations de séchage du type tunnels dépassent 800 KWH thermiques et 20 KWH électriques respectivement par tonne d'eau évaporée.

Pour des raisons évidentes de construction économique, il est préférable que la pression à l'intérieur de la tour de séchage selon l'invention soit peu différente de la pression atmosphérique.

Dans ce cas, la section horizontale de la tour sera un rectangle comme indiqué précédemment et les trémies de fluidisation seront alternativement des dièdres (comme décrit ci-dessus) envoyant les grains du centre vers la périphérie placés entre deux plans inclinés ramenant les grains de la périphérie vers le centre.

On pourra aussi utiliser uniquement des plans obliques amenant les grains d'une face latérale, vers la face opposée tantôt dans un sens, tantôt dans l'autre (comme par exemple la forme de réalisation illustrée à la figure 2) où la trémie 13 est identique à la trémie 13a après avoir pivotée de 180° autour d'un axe vertical.

Dans ce cas, il sera souvent préférable que la tour soit réalisée en cylindre de révolution et que les trémies perforées aient des formes de révolution autour de l'axe de la tour alternativement en chapeau chinois et en anneau tronconique. Les tubes surchauffeurs auraient alors la forme de circonférences concentriques.

Quand on préfère être en dépression, il faut que la pression en bas de la tour soit légèrement supérieure à la pression atmosphérique.

Si, au contraire, on préfère être en légère pression, on choisira, en haut de la tour, une pression voisine de la pression atmosphérique.

Chacun de ces choix entraîne bien entendu des conséquences sur le choix des températures. On en donnera ci-après quelques exemples.

1er exemple :

Pour sécher des produits résistant à 100°C et non hygroscopiques, ne contenant que de l'eau superficielle et peu ou pas d'eau liée, on pourra utiliser comme fluide sécheur de la vapeur d'eau aux environs de 100°C sous condition que, pour éviter les rentrées d'air, la tour soit en légère surpression par rapport à la pression atmosphérique.

Dans ce cas, par suite des pertes de charge fatales au long des étages de la tour, $\Theta_1$ sera légèrement inférieur à $\Theta_0$.

L'homme de l'art pourra choisir une seule trémie incluse entre quatre parois verticales et même pourra, s'il le faut, faire vibrer cette trémie.

Avec ou sans vibrations, il pourra aussi choisir plusieurs trémies incluses entre des parois verticales transportant les grains d'une paroi vers la paroi opposée tantôt dans un sens, pour l'une, tantôt en sens inverse, pour celle du dessous, comme pour celle du dessus.

Avec ou sans vibration, il pourra encore alterner des trémies dites mâles transportant les matières depuis le centre vers chacune des faces latérales opposées et les déversant sur des trémies dites femelles ramenant les matières vers le centre des deux parois latérales.

Pour ne prendre que le cas précédemment décrit en référence aux dessins les séchoirs de ce type seront composés d'un nombre N de trémies mâles et d'un nombre N - 1, N, ou N + 1 de trémies femelles ayant, de préférence, la même capacité de séchage.

L'homme de l'art disposera donc de nombreux éléments définis et de la possibilité d'adapter la pente des trémies mâles et femelles à la nature et à l'humidité des produits à sécher représentant une masse A d'eau à évaporer.

Pour cela, il disposera d'un appareil de mesure de pente, non décrit ici, composé de plusieurs trémies de longueur 1, de largeur L, agencées de telle façon que la pente des trémies puisse varier de 0 à 40 %.

Avec cet appareil, il déterminera $\alpha$ air, $\alpha$ air étant l'angle formé avec l'horizontale par les trémies pour que les grains secs à sécher se déplacent par fluidisation à la vitesse v (choisie par lui) sous l'influence de l'air de densité d'air traversant les grains à la vitesse V compatible avec un bon séchage.

En fluidisation, on peut écrire :

$$SIN\ \alpha\ air\ =\ \frac{v}{d\ air\ x\ V^2}\ ou\ SIN\ \alpha\ eau\ =\ \frac{v}{d\ eau\ x\ V^2}$$

comme v et $V^2$ sont des constantes.

On peut écrire $SIN\ \alpha\ eau = SIN\ \alpha\ air\ \frac{d\ air}{d\ eau}$

Puis le technicien effectuera les mêmes mesures avec des graines humides et en déduira une seconde valeur de $\alpha$.

Il constatera que ces deux valeurs sont assez rapprochées pour choisir l'angle le plus élevé des deux, donc la même pente pour toutes les trémies d'un même séchoir en admettant simplement que la vitesse d'écoulement v des grains sera plus grande à la fin du séchage qu'au début.

Dans ces conditions, toutes les trémies seront identiques et la vitesse v ne sera pas constante.

Si on appelle S la surface extérieure d'une nappe de tubes, n le nombre de nappes, et K le coefficient d'échange entre les tubes à $\Theta_2$ et le fluide sécheur (en watts par mètre carré et par degré d'écart), ce nombre K sera constant puisqu'il dépend seulement de V qui est constant et qui détermine le débit de fluide sécheur à travers les trémies.

Le technicien choisira $\Delta\Theta$, écart moyen de température entre $\Theta_0$ et $\Theta_0 + 2\,\Delta\Theta$, température de sortie du fluide sécheur. Ce $2\,\Delta\Theta$ représente la surchauffe du fluide, qui lui permet de sécher les matières.

En appelant $\lambda$, la chaleur latente pondérale d'évaporation de l'eau, et q la quantité d'eau évaporée par heure sur chaque élément de surface L x l on aura q

$$= \frac{2\,nsK}{\lambda}\,\Delta\Theta$$

Connaissant q le technicien qui aura à calculer un séchoir évaporant une masse A de vapeur d'eau négligera en un premier temps, l'énergie thermique enlevée par les matières sèches.

Le technicien pourra donc choisir m et N de façon à satisfaire l'une des relations $2\,mN \geqq \dfrac{A}{q}$ ou m $(2N \pm 1) \geqq \dfrac{A}{q}$

Pour obtenir une égale épaisseur de matières granuleuses sur les grilles de fluidisation et de séchage, la largeur de ces dernières ne peut pas être très grande et sera généralement inférieure à 3 mètres, et souvent n sera très élevé.

Le technicien choisira donc, à son gré, entre un seul module de grande hauteur ou plusieurs modules placés côte à côte et de hauteur raisonnable et adaptera sa solution aux besoins de son client.

Quoi qu'il en soit, en régime établi, on constate que la vapeur d'eau introduite à la pression légèrement supérieure à la pression atmosphérique et à la température de $\Theta_0$, entre dans le caisson inférieur 7, rencontre les tubes 14 chauffés à $\Theta_2$ se surchauffe de $2\,\Delta\Theta$, sort à travers les trous de la première série de trémies puis traverse la couche de granulés en achevant leur séchage et en perdant $2\,\Delta\Theta$. Ensuite la vapeur rencontre d'autres nappes de tubes se surchauffe de $2\,\Delta\Theta$ puis traverse les trous de la série suivante de trémies et la couche de granulés à sécher en perdant $2\,\Delta\Theta$, et ainsi de suite 2N fois (ici 6 fois).

A cause des pertes de charge dans la tour de séchage la vapeur sort à la température $\Theta < \Theta_0$, pour être aspirée par le ventilateur 20, qui la débarrasse de la vapeur produite par le séchage, et la renvoie dans le caisson inférieur 7 et ainsi de suite.

En sens inverse de la vapeur fluide-sécheur, les produits granuleux introduits descendent sur la première série de trémies, sont séchés par fluidisation en s'écartant du centre, tombent sur la deuxième série de trémies qui les ramène, par fluidisation, au centre en les séchant jusqu'à ce qu'ils retombent sur la série suivante de trémies et ainsi de suite, jusqu'à ce qu'ils sortent de la dernière trémie après une dernière fluidisation séchante, par les deux orifices aménagés entre le caisson 7 et les parois latérales 3 et 4.

La conduite 32 envoie la vapeur produite par le séchage dans le ou les cyclônes 22. Comme déjà indiqué la vapeur débarrassée des poussières sort en haut du cyclone dans la conduite 24 jusqu'au compresseur 25 qui relève sa pression de telle façon qu'elle puisse se condenser à la température $\Theta_2$ dans les faisceaux tubulaires 14.

On peut remarquer que, sans sortir du cadre de la présente invention, on pourrait aussi faire passer la totalité de la vapeur fluide-sécheur et vapeur produite dans le cyclône 22, ce qui éliminerait toutes les poussières du circuit.

On peut remarquer aussi que pour les grains de café qui ont une certaine épaisseur, on peut prévoir des étages de trémies simples, sans tubes 14, pour permettre à l'eau liée de migrer vers la périphérie du grain.

Le dispositif décrit dans ce premier exemple peut s'appliquer à tous les produits granuleux ou divisés non-hygroscopiques, tels que les sables siliceux, les granulats pour route, les fourrages granulés ou très divisés, le café, le cacao, etc..., mais ne peut convenir pour les graines et autres produits qui peuvent être séchés par un appareil décrit ci-dessous.

Les graines telles que maïs, blé, orge, colza, tournesol, etc..., ne peuvent supporter sans dommage une température de 100°C.

De plus, comme elles contiennent de l'eau liée et que la vitesse d'évaporation de cette eau, assez grande au début du séchage, quand le grain contient plus de 20 % d'eau, diminue quand la teneur en eau s'approche de 15 % ; les calories à fournir dans chaque étage augmentent depuis le bas de la tour jusqu'en haut.

Pour résoudre ce problème, le technicien devrait donc construire autant d'appareils différents qu'il y aurait d'espèces de grains à sécher, ce qui serait impossible ; il sera donc conduit à combiner un séchoir adapté aux grains dont le tonnage sera le plus important et notamment en France, comme dans de nombreux pays, il construira un appareil adapté au maïs ; en Irlande, en Ecosse, et dans les pays plus proches du Pôle, il concevra un appareil adapté au séchage de l'orge, etc....

Pour adapter ce séchoir à d'autres grains, l'utilisateur fera évoluer la température $\Theta_0$ supposée toujours inférieure à 100°C.

Second exemple :

A titre d'exemple seulement, on décrira ci-après les caractéristiques d'un séchoir adapté au séchage du maïs à usage amidonnier, dont $\Theta_0 = 60°C$.

Pour des raisons de prix de revient, il choisira : $\Theta_2 = 80°C$ par exemple.

En premier lieu, l'homme de l'art choisira une vitesse de fluidisation V et déterminera par expérience la vitesse v de déplacement des grains de maïs sur les grilles et trémie de fluidisation.

Avec l'appareil de mesure de pente, le technicien mesurera la pente à donner aux grilles et trémies de fluidisation pour assurer aux grains secs une vitesse de déplacement v sur les trémies, sous une vitesse de fluidisation V d'air de densité $d_{air}$ et il en déduira la pente à donner aux grilles pour obtenir cette vitesse v sous la fluidisation V avec un air humide à 60°C de densité $d'_{air}$ par la formule :

$$SIN\ \alpha\ air\ à\ 60° = SIN\ \alpha\ air\ sec\ \frac{d\ air}{d'air} = \frac{1,29}{0,921} = 1,40$$

Le technicien connaît, par ailleurs, que le maïs à 35 % d'humidité perd son humidité beaucoup plus vite au début du séchage qu'en fin de séchage.

En prenant comme unité la quantité de chaleur en watts à fournir au maïs contenant seulement 15 % d'eau les quantités de chaleur à fournir, depuis le 1er étage inférieur jusqu'au 25ème étage supérieur, seront approximativement représentés successivement par les 25 coefficients suivants :
1 ; 2 ; 2,5 ; 2,5 ; 2,5 ; 2,5 ; 3 ; 3 ; 3,5 ; 4 ; 4 ; 4 ; 5 ; 5,5 ; 6 ; 6,5 ; 7 ; 7,5 ; 8 ; 9 ; 9,5 ; 10 ; 14 ; 20 ; 23.

La somme des coefficients atteint 165,5.

Le technicien calculera le nombre W de watts à fournir pour obtenir la puissance évaporatoire désirée.

En divisant W par 165,5, le technicien connaîtra la puissance en watts à fournir au premier étage inférieur pour atteindre dans les 25 étages la capacité d'évaporation caractérisée par W.

Le technicien décide de placer une seule nappe de tubes sous la première trémie.

Or, il dispose de grilles standards de longueur l et de largeur L liées à une surface extérieure de tubes définie et standard S par nappe de tubes.

A la vitesse choisie V correspond un coefficient K d'échange entre le fluide sécheur à $\Theta_0$ et les tubes chauffants à $\Theta_2$.

D'autre part, la température $\Theta_2$ est constante à 80°C tandis que la température du fluide sécheur s'élève progressivement au-dessus de $\Theta_0$ d'un étage à l'autre jusqu'à atteindre $\Theta_1 = 69°C$ à la sortie du dernier étage.

La différence de température $\Theta = \Theta_2 - \Theta$ diminue donc progressivement de 19,7 à 6,6 depuis le premier jusqu'au dernier étage.

Le technicien pourrait donc satisfaire exactement les besoins de chaleur de chaque étage en bouchant certains tubes, tout en les laissant en place pour bien répartir le fluide sécheur. Il placera sous chacun des 25 étages successifs, les nombres de nappes suivants :
1 ; 1 ; 1 ; 1 ; 1 ; 1 ; 1 ; 2 ; 2 ; 3 ; 3 ; 3 ; 4 ; 5 ; 5 ; 7; 7 ; 8 ; 8 ; 11 ; 11 ; 20 ; 20 ; 40 ; 40.

En conséquence de l'augmentation de masse et de la diminution de la densité qui passe de 0,921 à 0,773, la vitesse de fluidisation V sera multipliée par 1,29 et l'effet de fluidisation sera multiplié par 1,66 depuis le 1er étage inférieur jusqu'au 25è étage supérieur tandis que les grains de maïs auront augmenté de volume dans la proportion de 17 % environ.

Il faudra en tenir compte dans le choix de la pente à donner aux grilles perforées des étages supérieurs.

Enfin, l'air humide à 69°C composé de 35 % d'eau devra passer dans un condenseur coûteux où la condensation de la vapeur d'eau produite par le séchage fera bouillir un liquide du genre fréon aux environs de 55°C.

Au lieu d'un COP de 10 obtenu avec l'eau pure, on obtiendra un COP de 8 environ en comprimant ce fréon à $\Theta_2 = 80°C$; le COP est le coefficient de performance qui représente le nombre de kW thermiques que peut transporter une pompe à chaleur en consommant un seul kW électrique.

La figure 7 représente schématiquement un séchoir à maïs et le dispositif de récupération d'énergie.

Sur cette figure, on a représenté schématiquement en I la trémie mâle correspondant au premier étage inférieur, en 125 le 25è étage supérieur, on n'a pas représenté les étages 2 à 24.

On remarque en 126 et 127, les deux parois latérales du séchoir, en 128 la paroi de fond du séchoir.

La paroi frontale non représentée est enlevée.

On remarque aussi les deux parois pleines 130 et 131 inclinées de façon à ce que les grains de maïs descendent bien sur l'arête supérieure du 25è étage et réalisent une égale répartition le long de chacune des trémies de cet étage.

On remarque la gaine 132 solidaire du premier étage de trémie, et les deux volumes 33 et 34 limités par le plan horizontal passant par l'arête supérieure du 25è étage et par les parois inclinées 130 et 131. Depuis 33 et 34 l'air saturé d'eau à 69°C est collecté par une gaine de fond non représentée. De là, le long de la gaine schématisée 36, l'air humide est aspiré par le ventilateur 37 qui le refoule, à travers la gaine 38, dans le condenseur 39, où la vapeur produite par le séchage se condense de 69°C à 60°C, en provoquant l'évaporation du liquide auxiliaire, genre fréon, bouillant à 55°C environ.

Enfin, l'air saturé à 60°C, débarrassé des eaux et boues en 40, est acheminé, sous pression légèrement supérieure à la pression atmosphérique, par la gaine horizontale 41 située au fond de la chambre 132.

Le liquide auxiliaire évaporé dans 39 est acheminé par la tuyauterie 42, jusqu'au compresseur 43, qui élève sa pression de telle façon qu'il puisse se liquéfier à la température $\Theta_2 = 80°C$ dans les tubes non-représentés et dont le nombre est défini plus haut.

Depuis le compresseur, le gaz comprimé est acheminé, par la tuyauterie 44, dans un tube vertical distribuant le gaz apporteur de calories dans les tubes de condensation à 80°C qui restituent au circuit d'air les calories nécessaires à l'évaporation de l'eau à éliminer par le séchage.

Pour mettre en route ce séchoir, on met en route simultanément le compresseur 43 et le ventilateur 37, et on commence l'introduction des grains quand la température $\Theta_0 = 60°C$ est atteinte.

En marche normale, les grains de maïs descendent, de haut en bas, sur l'arête supérieure du 25è étage et se répartissent aussi bien que possible sur les deux pentes opposées des trémies de fluidisation.

Ils descendent par fluidisation, d'étage en étage, jusqu'à sortir du séchoir dans les intervalles compris entre la gaine 132, solidaire du 1er étage inférieure de la trémie, et les deux parois latérales 126 et 127 du séchoir.

En sens inverse des grains, l'air saturé à 60°C entré en 132, est surchauffé à 60°C au contact des tubes contenant le gaz qui se condense à 80°C, puis il traverse les grilles du premier étage et les grains de maïs, dont il achève le séchage.

L'air sort à environ 60°3 C, saturé, et est surchauffé à 61°6 C par les tubes à 80°C et après traversée des grilles du 2ème étage et des grains de maïs, il sort saturé à environ 61°C et ainsi de suite, jusqu'à être surchauffé de 68°8C à 78°C par les 40 nappes tubulaires du 25ème étage avant de traverser les grilles et les grains humides qui le saturent et remontent sa température aux environs de 69°C.

L'air saturé à 69°C, collecté par la gaine, est aspiré à travers la gaine 36 par le ventilateur 37 et refoulé par lui dans la gaine 38 et dans le condenseur bouilleur 39.

Dans le condenseur, l'air condense la totalité de la vapeur produite par le séchage et se débarrasse de l'eau boueuse dans le séparateur 40 avant de boucler le circuit dans la gaine 132, après avoir suivi la gaine 41.

Le condenseur bouilleur 39 fait bouillir, aux environs de 55°C, un liquide genre fréon, condensé à 80°C dans les tubes en doigt de gant ; le gaz formé est comprimé aux environs de 9 bars par le compresseur 43 de façon à préparer sa condensation à 80°C dans les tubes.

La ventilation consomme environ 22 KWH pr tonne d'eau évaporée, le compresseur consomme environ 76 KWH par tonne d'eau évaporée.

Les calculs montrent que ce genre de séchoir peut consommer environ 120 KWH électriques par tonne d'eau évaporée ; il est donc bien supérieur aux séchoirs classiques qui consomment environ 800 KWH thermiques et 20 KWH électriques par tonne d'eau évaporée. Mais la description précédente montre que la construction de cet appareil est beaucoup trop onéreuse, compte tenu du coût de l'énergie, aussi longtemps qu'il ne sera pas possible d'abaisser les coûts par une construction en plastique et en grande série.

Aussi pour le moment, sera-t-il nécessaire de remplacer les étages aussi différenciés que ci-dessus décrits par les étages standards prévus dans le premier exemple.

Pour adapter ce séchoir à d'autres graines et, quel que soit l'appareillage choisi, la température de $\Theta_0$ peut-être abaissée à 40°C et même plus bas, sans conséquence autre qu'une diminution de capacité et une augmentation des consommations électriques.

Sans sortir du cadre de la présente invention, les grilles perforées peuvent aussi être plus inclinées que ne le demande la fluidisation, le séchoir peut être rempli de matières granuleuses, comme le montre la figure 8. On peut aussi supprimer les grilles, comme illustré à la figure 9.

Naturellement, le séchoir précédent s'adapte à tous les dispositifs d'introduction continue ou pas, d'extraction continue ou pas avec ou sans préchauffage des matières.

Naturellement, toutes les graines et tous les matériels doivent être soigneusement calorifugés.

La vapeur à éliminer peut être un solvant, le gaz porteur peut être de l'air ou un gaz quelconque sans sortir du cadre de la présente invention.

Au lieu de prévoir des tubes en doigt de gant et des trémies grilles amovibles, on peut prévoir des tubes surchauffeurs traversant de part en part le séchoir et des grilles portées non par les parois latérales, mais bien par la paroi du fond et par la paroi frontale sans sortir du cadre de la présente invention.

On peut encore abaisser la température de tout ou partie du fluide sécheur par le point froid d'une pompe à chaleur et surchauffer tout ou partie de ce fluide pour affiner le séchage, sans sortir du cadre de la présente invention. On peut aussi supprimer le condenseur 39 et utiliser un ventilateur 37 assez puissant pour comprimer le fluide sécheur de la température $\Theta_1$ à la température $\Theta_2$ suffisante pour fournir, par condensation dans les tubes croisés, en série, en parallèle, ou en séries parallèles, la chaleur nécessaire à l'évaporation produite par le séchage.

## Revendications

1. Tour de séchage à étages de produits en grains circulant de haut en bas et d'un étage à l'autre alors qu'un fluide sécheur circule à contre-courant de bas en haut avec fluidisation de ces grains dans chaque étage, des tubes croisés étant prévus pour fournir les calories nécessaires au séchage et étant eux-mêmes le siège d'une circulation d'un fluide caloporteur, ledit fluide sécheur (air, gaz ou vapeur d'eau) étant admis à la base de chaque étage à une température $\theta_0$, surchauffé à une température supérieure à $\theta_0$ par contact avec les tubes croisés chauffés à une température $\theta_2 > \theta_0$, puis traversant des grilles perforées supportant lesdits produits en grains en fluidisant ces derniers et en les séchant et, de plus en plus chargé en vapeur, reproduisant de 4 à 40 fois et plus cette surchauffe et cette fluidisation séchante et désurchauffante, et sortant à contre-courant par rapport au produit granuleux et à une température $\theta_1$, pour être recyclé sous les premiers tubes croisés, à la température $\theta_0$, tour de séchage caractérisée en ce que ledit fluide sécheur est saturé de la vapeur produite par le séchage, lesdites grilles (1) disposées au-dessus desdits tubes croisés (14) comportent des trous orientés dans le sens de la circulation des grains d'un étage à l'autre et lesdits tubes croisés sont en forme de doigts de gants, bouchés à une extrémité disposés horizontalement ou inclinés vers le bas depuis ladite extrémité bouchée jusqu'à l'entrée du fluide caloporteur qui les alimente.

2. Tour de séchage selon la revendication 1, caractérisée en ce que sa face frontale est amovible et en ce que lesdites grilles perforées sont amovibles sur des glissières ou des consoles comme les plateaux d'un four réglables en hauteur.

3. Tour de séchage selon l'une des revendications 1 ou 2, caractérisée en ce qu'elle a la forme d'un cylindre de révolution, que lesdites grilles sont des anneaux inclinés et que lesdits tubes croisés sont des cercles concentriques.

4. Tour de séchage selon l'une des revendications 1 ou 2, caractérisée en ce que lesdites grilles sont des trémies sous forme de dièdres alternées envoyant les grains de matière du centre vers la périphérie et de la périphérie vers le centre ou bien en forme de toiture à deux ailes (trémies mâles) ou en forme de double auvent (trémies femelles).

5. Tour de séchage, selon l'une quelconque des revendications 1 à 4, caractérisée en ce que les trémies sont des plans obliques (201 - 202) amenant les grains d'une face latérale vers la face opposée tantôt dans un sens, tantôt en sens inverse.

6. Tour de séchage, selon l'une quelconque des revendications 1 à 5, caractérisée en ce que tout ou partie des grilles de fluidisation soit animée de vibrations.

7. Tour de séchage, selon la revendication 4, caractérisée en ce que les grilles perforées ont la forme de dièdres de grande pente.

8. Tour de séchage, selon l'une des revendications 1 à 3, caractérisée en ce que les grilles perforées sont directement constituées par les tubes surchauffeurs eux-mêmes.

9. Tour de séchage, selon l'une quelconque des revendications 1 à 8, caractérisée en ce qu'une partie sensiblement équivalente à la vapeur évaporée par séchage est comprimée par un compresseur (25) à la température $\theta_2 > \theta_0$ pour aller se condenser à cette température $\theta_2$ dans des tubes croisés (14) tandis qu'un ventilateur (20) recycle la vapeur à $\theta_0$.

10. Tour de séchage, selon l'une des revendications 1 à 8, caractérisée en ce que le fluide sécheur saturé de vapeur sortant à $\theta_1$ est envoyé par un ventilateur (37) dans un condenseur (39) où la vapeur formée par le séchage se condense en faisant bouillir un liquide intermédiaire avant de retourner à $\theta_0$ dans le circuit de séchage et en ce que le gaz formé par évaporation du liquide intermédiaire est comprimé pour atteindre la température $\theta_2$ supérieure à $\theta_1$, dans lesdits tubes croisés.

11. Tour de séchage selon l'une quelconque des revendications 1 à 10, caractérisée en ce que le fluide sécheur est un solvant.

**Patentansprüche**

1. Mehretagen-Trockenturm für Kornprodukte, die von oben nach unter und von einer Etage zur anderen zirkulieren, während ein Trockenfluid gegenströmig von unten nach oben zirkuliert, das für eine Wirbelschicht für diese Körner auf jeder Etage sorgt, wobei versetzte Rohre vorgesehen sind, die die für die Trocknung benötigten Kalorien liefern und in denen selbst ein flüssiges Kühlmittel zirkuliert, wobei das besagte Trockenfluid (Luft, Gas oder Wasserdampf) bei einer Temperatur $\Theta_0$ dem Boden jeder Etage zugeführt wird, auf eine Temperatur über $\Theta_0$ überhitzt wird, und zwar durch den Kontakt mit den versetzten Rohren bei einer Temperatur $\Theta_2 > \Theta_0$, dann durchbrochene Gitter durchquert, auf denen die besagten Kornprodukte liegen, indem es letztere durchwirbelt und trocknet und, je mehr es mit Dampf beladen ist, diese Überhitzung und die trocknende und abkühlende Wirbelung vier bis 40 mal und mehr wiederholt, und gegenüber dem körnigen Produkt gegenströmig und bei einer Temperatur $\Theta_1$ austritt und unter den ersten versetzten Roh-

ren bei der Temperatur $\Theta_0$ wieder aufgefangen wird, ein Trockenturm, der dadurch gekennzeichnet ist, daß das besagte Fluid durch den durch die Trocknung produziertem Dampf gesättigt wird, wobei die über den besagten, versetzten Rohren (14) angeordneten besagten Gitter (1) Löcher aufweisen, die in Zirkulationsrichtung der Körner von einer Etage zur anderen ausgerichtet sind, und daß die besagten versetzten Rohre wie Finger eines Handschuhs geformt sind, die an einem Ende verschlossen sind und von dem besagten, verschlossenen Ende her horizontal oder schräg nach unten bis zum Eintritt des flüssigen Kühlmittels angeordnet sind, das sie versorgt.

2. Trockenturm nach Anspruch 1, dadurch gekennzeichnet, daß seine Vorderseite wegnehmbar ist, sowie dadurch, daß die besagten durchlöcherten Gitter wie die Backbleche eines Ofens wegnehmbar auf Gleitschienen oder Konsolen liegen und höhenverstellbar sind.

3. Trockenturm nach einem der Ansprüche 1 oder 2, dadurch gekennzeichnet, daß er die Form eines Drehzylinders hat, daß sie besagten Gitter geneigte Ringe sind und daß die besagten versetzten Rohre konzentrische Ringe sind.

4. Trockenturm nach einem der Ansprüche 1 oder 2, dadurch gekennzeichnet, daß die besagten Gitter Trichter in Form wechselnder Dieder sind, die die Körner von der Mitte nach außen und von außen zur Mitte befördern, oder aber in Form eines Daches mit zwei Flügeln (Außentrichter) oder in Form eines doppelten Vordachs (Innentrichter).

5. Trockenturm nach einem der Ansprüche 1 bis 4, dadurch gekennzeichnet, daß die Trichter schräge Ebenen (201 - 202) sind, die die Körner von einer Seitenfläche zur gegenüberliegenden Seite mal in einer, mal in der anderen Richtung bringt.

6. Trockenturm nach einem der Ansprüche 1 bis 5, dadurch gekennzeichnet, daß die Wirbelgitter teilweise oder ganz durch Vibration bewegt werden.

7. Trockenturm nach Anspruch 4, dadurch gekennzeichnet, daß die durchlöcherten Gitter die Form von Diedern mit starker Neigung haben.

8. Trockenturm nach einem der Ansprüche 1 bis 3, dadurch gekennzeichnet, daß die durchlöcherten Gitter direkt von den überhitzten Rohren selbst gebildet werden.

9. Trockenturm nach einem der Ansprüche 1 bis 8, dadurch gekennzeichnet, daß ein dem bei der Trocknung verdunsteten Dampf deutlich gleicher Teil durch einen Verdichter (25) bei der Temperatur $\Theta_2 > \Theta_0$ verdichtet wird, um bei dieser Temperatur $\Theta_2$ in den versetzten Rohren (14) zu kondensieren, während ein Ventilator (20) den Dampf bei $\Theta_0$ in den Kreislauf zurückführt.

10. Trockenturm nach einem der Ansprüche 1 bis 8, dadurch gekennzeichnet, daß das mit dem bei $\Theta_1$ austretenden Dampf gesättigte Trockenfluid durch einen Ventilator (37) in einen Kondensator (39) geführt wird, in dem der bei der Trocknung entstandene Dampf kondensiert wird und gleichzeitig eine Zwischenflüssigkeit zum Sieden bringt, bevor er bei $\Theta_0$ in den Trockenkreislauf zurückgeführt wird, sowie dadurch, daß das durch die Verdampfung der Zwischenflüssigkeit entstandene Gas verdichtet wird, um in den besagten versetzten Rohren die über $\Theta_1$ liegende Temperatur $\Theta_2$ zu erreichen.

11. Trockenturm nach einem der Ansprüche 1 bis 10, dadurch gekennzeichnet, daß das Trockenfluid ein Lösungsmittel ist.

## Claims

1. A multistage drying tower for granular products circulating from the top downwards and from one stage to another, while a drying fluid circulates countercurrently from the bottom upwards with fluidisation of these grains in each stage, overlapping tubes being provided to supply the heat required for drying and themselves being the seat of a circulation of a heat-transfer fluid, said drying fluid (air, gas or steam) being admitted at the base of each stage at a temperature $\theta_0$, superheated to a temperature higher than $\theta_0$ by contact with the overlapping tubes heated to a temperature $\theta_2 > \theta_0$, then passing through perforated gratings supporting said granular products by fluidising them and drying them and, increasingly laden with steam, reproducing from 4 to 40 times and more this superheat and this drying and desuperheating fluidisation, and leaving countercurrently in relation to the granular product and at a temperature $\theta_1$ so as to be recycled under the first overlapping tubes at the temperature $\theta_0$, said drying tower being characterised in that said drying fluid is saturated with the steam produced by the drying, said gratings (1) disposed above said overlapping tubes (14) comprise holes directed in the direction of circulation of the grains from one stage to another, and said overlapping tubes are in the form of the fingers of a glove, closed at one end, and disposed horizontally or inclined downwards from said closed end up the inlet of the heat-transfer fluid which is supplied to them.

2. A drying tower according to claim 1, characterised in that its front side is detachable and in that said perforated gratings are detachable on slides or brackets, like vertically adjustable oven shelves.

3. A drying tower according to either claim 1 or claim 2, characterised in that it is in the form of a cylinder of revolution, in that said gratings are inclined rings and in that said overlapping tubes are concentric circles.

4. A drying tower according to either claim 1 or claim 2, characterised in that said gratings are hoppers in the form of alternate dihedra forwarding the grains of material from the centre towards the periphery and from the periphery towards the centre, or are in the form of a roof with two wings (male hoppers) or in the form of a double canopy (female hoppers).

5. A drying tower according to any one of claims 1 to 4, characterised in that the hoppers are oblique planes (201 - 202) conveying the grains from lateral side towards the opposite side, now in one direction, now in the opposite direction.

6. A drying tower according to any one of claims 1 to 5, characterised in that vibrating movement is imparted to all or some of the fluidisation gratings.

7. A drying tower according to claim 4, characterised in that the perforated gratings are in the form of steeply inclined dihedra.

8. A drying tower according to any one of claims 1 to 3, characterised in that the perforated gratings are directly by the superheating tubes themselves.

9. A drying tower according to any one of claims 1 to 8, characterised in that a portion substantially equivalent to the steam evaporated by drying is compressed by a compressor (25) at the temperature $\theta_2 > \theta_0$ and then condenses at this temperature $\theta_2$ in the overlapping tubes (14), while a fan (20) recycles the steam at $\theta_0$.

10. A drying tower according to any one of claims 1 to 8, characterised in that the drying fluid saturated with steam and exiting at $\theta_1$ is forwarded by a fan (37) into a condenser (39), in which the steam formed by drying condenses by causing an intermediate liquid to boil, before returning at $\theta_0$ into the drying circuit, and in that the gas formed by evaporation of the intermediate liquid is compressed to reach the temperature $\theta_2$ higher than $\theta_1$, in said overlapping tubes.

11. A drying tower according to any one of claims 1 to 10, characterised in that the drying fluid is a solvent.

# FIG. 1

# FIG. 2

# FIG. 3

FIG.5

FIG.4

FIG.7

FIG.8

FIG.9

14

# FIG.6